# EUROPÄISCHE PATENTSCHRIFT

(11) **EP 3 922 460 B1**
(45) Veröffentlichungstag und Bekanntmachung des Hinweises auf die Patenterteilung: **01.05.2024**
(21) Anmeldenummer: 20178804.9
(22) Anmeldetag: 08.06.2020
(51) Int. Cl.: B29C 64/393, B33Y 80/00, B33Y 30/00, B29C 64/245

(54) **VERFAHREN UND VORRICHTUNG ZUM AUFBRINGEN EINES DESIGNS AUF EINE OBERFLÄCHE EINES ELEMENTES EINES SCHREIBGERÄTES ODER EINES ZUBEHÖRS FÜR EIN SCHREIBGERÄT MITTELS 3D-DRUCK**
METHOD AND DEVICE FOR APPLYING A DESIGN TO A SURFACE OF AN ELEMENT OF A WRITING IMPLEMENT OR AN ACCESSORY FOR A WRITING IMPLEMENT BY MEANS OF 3D PRINTING
PROCÉDÉ ET DISPOSITIF D'APPLICATION D'UNE ESTHÉTIQUE À UNE SURFACE D'UN ÉLÉMENT D'UN APPAREIL D'ÉCRITURE OU D'UN ACCESSOIRE POUR UN APPAREIL D'ÉCRITURE PAR IMPRESSION 3D

(43) Veröffentlichungstag der Anmeldung: 15.12.2021
(73) Patentinhaber: Faber- Castell AG, 90546 Stein (DE)
(72) Erfinder: Kaul, Wolfgang, 90574 Rosstal (DE); Raps, Jürgen, 95030 Hof (DE); Haubner, Manuel, 95179 Geroldsgrün (DE)
(74) Vertreter: Schlögl, Markus

(56) Entgegenhaltungen:
- CN-A- 106 239 918
- CN-A- 108 973 113
- US-A1- 2017 217 100
- US-A1- 2019 105 833

## Beschreibung

Die Erfindung betrifft ein Verfahren sowie eine Vorrichtung zum Aufbringen eines Designs auf eine Oberfläche eines Elementes eines Schreibgerätes oder eines Zubehörs für ein Schreibgerät mittels 3D-Druck.

Schreibgeräte, beispielsweise Blei- oder Farbstifte oder Kugelschreiber, werden typischerweise mit einem Farbüberzug, beispielsweise einem farbigen Lack, versehen oder bereits aus farbigen Elementen zusammengesetzt, um eine ansprechende optische Form oder die mit dem Schreibgerät auf einer Schreibunterlage, beispielsweise Papier, erzeugbare Farbe zu kennzeichnen. Zum Aufbringen von Logos oder die Schreibgeräte kennzeichnenden Informationen, beispielsweise deren Härtegrad, auf das Schreibgerät oder auch auf Zubehörteile werden diese während des Herstellungsprozesses oder im Anschluss daran beschriftet, beispielsweise wiederum mittels Lackierung oder auch mittels Prägefolien oder verschiedenen Gravuren. Eine individuelle Gestaltung der Schreibgeräte ist in einem solchen automatisierten Herstellungsprozess nicht oder nur mit erheblichem Aufwand möglich.

Der Erfindung liegt daher die Aufgabe zugrunde, ein Verfahren und eine Vorrichtung zur individuellen Gestaltung einer Oberfläche eines Elementes eines Schreibgerätes oder einer Oberfläche eines Elementes für ein Schreibgerät vorzuschlagen.

Ein herkömmlicher 3D-Drucker ist aus US 2017/217100 A1 und US 2019/105833 A1 bekannt

Erfindungsgemäß wird die erstgenannte Aufgabe durch ein Verfahren mit den Merkmalen des Anspruchs 1 gelöst. Vorteilhafte Ausgestaltungen und Weiterbildungen sind in den jeweils abhängigen Ansprüchen angegeben.

Das erfindungsgemäße Verfahren zum Aufbringen eines Designs auf eine Oberfläche eines Elementes eines Schreibgerätes oder auf eine Oberfläche eines Elementes für ein Schreibgerät erfolgt mittels 3D-Druck und umfasst folgende Schritte:
In einem ersten Schritt (Schritt a)) wird das Design mittels eines Eingabesystems gestaltet und/oder zumindest teilweise aus einer oder mehreren Vorlagen mittels eines Eingabesystems ausgewählt. Die Gestaltung des Designs kann dabei individuell erfolgen, als beispielsweise eine händische Unterschrift sein. Als Vorlagen können beispielsweise einzelne Symbole oder ähnliches dienen, die dann individuell ausgewählt oder noch weiter gestaltet werden können. Das Eingabesystem ist insbesondere ein Tablet oder ein Smartphone oder ein Computer.

In einem zweiten Schritt (Schritt b)) wird das gestaltete Design in eine Vektorgrafik oder in ein 3D-Modell umgewandelt.

In einem dritten Schritt (Schritt c)) wird die Vektorgrafik oder das 3D-Modell über eine Schnittstelle an einen 3D-Drucker übergeben.

Je nach Art und in Abhängigkeit des verwendeten 3D-Druckers kann vor oder bei der Übergabe eine Umwandlung der Vektorgrafik oder des 3D-Modells in ein druckfähiges Datenformat erforderlich sein, beispielsweise .stp oder .stl.

In einem vierten Schritt (Schritt d)) wird das zu bedruckende Element mittels einer Positionier- und Drehvorrichtung innerhalb eines Druckraums des 3D-Druckers positioniert.

In einem fünften Schritt (Schritt e)) wird das Design auf die Oberfläche des Elementes gedruckt, wobei ein Druckkopf des 3D-Druckers zumindest entlang einer ersten Bewegungsachse in x und/oder -x-Richtung bewegt und das Element in Abhängigkeit des Verlaufs des Designs mittels der Positionier- und Drehvorrichtung um eine Drehachse des Elementes so gedreht wird, dass der Druckkopf stets senkrecht zu einer Tangentialebene des zu bedruckenden Bereichs oder des zu bedruckenden Punktes der Oberfläche des Elementes ausgerichtet ist.

Der Begriff "Element" umfasst im Sinne dieser Anmeldung sowohl Elemente eines Schreibgerätes, also beispielsweise einen Schaft oder ein Schaftteil oder eine Schreibgerätekappe, als auch Elemente für ein Schreibgerät, also Zubehör oder Zubehörteile, wie beispielsweise Spitzer.

Die Idee der Erfindung besteht darin, eine individuelle Gestaltung von Schreibgeräten oder Zubehörteilen zu ermöglichen, indem diese nach dem automatisierten Herstellungsprozess mit einem mittels 3D-Druck aufgebrachten Designs gestaltet werden. Eine solche individuelle Gestaltung lässt sich insbesondere zeitnah beim Kauf des Schreibgerätes oder Zubehörs durch den Kunden direkt im Laden gestalten und aufbringen, indem der Kunde dort sein Design an dem Eingabesystem gestaltet oder auswählt und dieses dann vor Ort auf das von ihm gewünschte Produkt aufgedruckt wird.

Ein weiterer wesentlicher Punkt der Erfindung liegt darin, dass das Design nicht linienweise, sondern verlaufsweise aufgebracht wird. Bei einem linienweisen Druckvorgang würde der Druckkopf entlang der ersten Bewegungsachse lediglich in x-Richtung, also "vorwärts" bewegt werden, bis die einzelnen Punkte oder Linien in einer Zeile in x-Richtung aufgebracht sind und erst dann würde eine Drehung des Elementes erfolgen, um einzelne Punkte oder Linien in einer weiteren Zeile in x-Richtung aufzubringen. Gemäß der Erfindung, also einem verlaufsweisen Aufbringen des Designs, wird das Element während des Druckvorgangs so gedreht, sodass sich der Druckkopf entlang des Verlaufs des Designs über die Oberfläche des Elementes bewegt. Er wird hierbei entlang einer ersten Bewegungsachse vor und zurückbewegt und das Element wird gedreht. Sofern beispielsweise ein in y-Richtung orientierter Abschnitt des Designs, beispielsweise ein Strich, gedruckt werden soll, bleibt der Druckkopf an Ort und Stelle und das Element wird gedreht. Bei sowohl in x- als auch in y-Richtung verlaufenden Abschnitten des Designs, erfolgen sowohl eine Bewegung des Druckkopfes als auch zeitgleich eine Drehung des Elementes. Bei ausschließlich in x-Richtung orientierten Teilen des Designs, wird der Drucckopf bewegt, aber es erfolgt keine Drehung des Elements.

Die Drehung erfolgt dabei so, dass der der Druckkopf stets senkrecht zu einer Tangentialebene des zu bedruckenden Bereichs oder des zu bedruckenden Punktes der Oberfläche des Elementes ausgerichtet ist, der Materialauftrag während des Druckvorgangs also stets lotrecht erfolgt. Dabei wird auch der Abstand zwischen der Oberfläche des Elementes bzw. dem zu bedruckenden Bereich oder dem zu bedruckenden Punkt der Oberfläche des Elementes konstant gehalten.

Die Drehung des Elementes erfolgt dabei insbesondere um eine parallel zu der ersten Bewegungsachse und/oder entlang einer Mittellängsachse des Elementes verlaufenden Drehachse.

Bei einer vorteilhaften Weiterbildung des Verfahrens wird der Druckkopf zusätzlich entlang einer zweiten Bewegungsachse in y- und/oder -y-Richtung bewegt, die senkrecht zu der ersten Bewegungsachse orientiert ist. Dies ist insbesondere bei Elementen von Vorteil, die gerade Flächenabschnitte aufweisen, beispielsweise eine sechseckige Form aufweisende Schreibgeräte, sodass ein solcher, gerader Flächenabschnitt ohne Drehung des Stiftes bedruckt werden kann.

Um eine zweite und/oder eine weitere Schicht des Designs aufzubringen, wird der Druckkopf insbesondere auch entlang einer dritten Bewegungsachse in z-und/oder -z-Richtung bewegt.

Um die zum Aufbringen des Designs erforderlichen Drehwinkel zu ermitteln und/oder zu überprüfen wird gemäß einer bevorzugten Ausgestaltung eine Lage der Oberfläche des Elementes mittels eines, insbesondere am Druckkopf des 3D-Druckers angeordneten Sensors erfasst. Unter Lage der Oberfläche ist hierin sowohl die Ausrichtung oder Form der Oberfläche, beispielsweise rund oder eben, als auch der Abstand und die Orientierung der Oberfläche zum Druckkopf zu verstehen. Mit anderen Worten: Eine Oberfläche des Elementes, welche bedruckt werden soll, wird von dem Sensor erkannt, um insbesondere die zum Bedrucken der Oberfläche mit dem Design erforderliche Bewegung um die Drehachse zu ermitteln.

Eine vorteilhafte Anwendung des Verfahrens ergibt sich insbesondere für Elemente, die eine gekrümmte Oberfläche aufweisen. Für solche insbesondere runden Elemente, beispielsweise ein runder Schaft oder eine runde Stiftkappe, bietet das Verfahren den Vorteil, dass das Design durch die zeitgleiche Drehung des Elementes während des Druckvorgangs verlaufsweise auf die gekrümmte Oberfläche aufgedruckt werden kann.

Ferner ist es von Vorteil, wenn die zum Aufbringen des Designs erforderlichen Drehwinkel bereits vor dem Drucken des Designs auf die Oberfläche unter Berücksichtigung der Form der Oberfläche ermittelt und an die Positionier- und Drehvorrichtung übermittelt werden. Es erfolgt also eine Voreinstellung und Abspeicherung der zum Drucken erforderlichen Drehbewegungen.

Die Gestaltungsfreiheit für das Design bzw. dessen Individualität kann dadurch erhöht werden, wenn beim Aufbringen des Designs zwei oder mehrere Materialien verwendet werden, die sich beispielsweise in ihrer Farbe unterscheiden. Als Materialien kommen bei dem erfindungsgemäßen Verfahren grundsätzlich alle gängigen Materialien in Frage, die insbesondere im FLM- (**F**used **L**ayer **M**anufacturing), FDM- (**F**used **D**eposition **M**odeling) oder FFF- (**F**used **F**ilament **F**abrication) Verfahren verarbeitet werden können. Beispielhaft seien Acrylnitril-Butadien-Styrol-Copolymere (ABS), Polylactide (PLA) oder gefüllte Kunststoffe, beispielsweise mit Holzmehl, Talkumpartikel, Metallteilchen, Keramik oder Fasern jeglicher Art, z.B. Mineralfasern, Karbonfasern, Glasfasern oder Naturfasern, genannt.

Erfindungsgemäß wird die zweitgenannte Aufgabe durch eine Vorrichtung mit den Merkmalen des Anspruchs 10 gelöst.

Vorteilhafte Ausgestaltungen und Weiterbildungen sind in den jeweils abhängigen Ansprüchen angegeben.

Die erfindungsgemäße Vorrichtung ist ein Drucksystem zum Aufbringen eines Designs auf eine Oberfläche eines Elementes eines Schreibgerätes oder auf eine Oberfläche eines Elementes für ein Schreibgerät mittels 3D-Druck, insbesondere zum Durchführen eines Verfahrens nach einem der vorhergehenden Ansprüche. Die Vorrichtung umfasst einen 3D-Drucker mit einem Druckkopf, wobei der Druckkopf innerhalb eines Druckraums entlang einer ersten, zweiten und/oder dritten Bewegungsachse bewegbar ist. Ferner umfasst die Vorrichtung eine Positionier- und Drehvorrichtung zum Positionieren des Elementes innerhalb des Druckraumes des 3D-Druckers und zum Drehen des Elementes um eine Drehachse. Das Element ist dabei an der Positionier- und Drehvorrichtung gehalten oder befestigt oder angebracht und in den Druckraum einbringbar und wieder heraus bringbar und/oder innerhalb des Druckraumes positionierbar. Des Weiteren umfasst die Vorrichtung ein Eingabesystem zur Gestaltung des Designs und/oder zum zumindest teilweisen Auswählen des Designs aus einer oder mehreren Vorlagen sowie eine Datenverarbeitungseinheit zur Umwandlung des Designs in eine Vektorgrafik oder in ein 3D-Modell und eine Schnittstelle zur Übergabe der Vektorgrafik oder des 3D-Modells an den 3D-Drucker.

Bei einer bevorzugten Ausgestaltung umfasst die Vorrichtung einen Sensor zum Erfassen der Lage der Oberfläche des Elementes.

Der Sensor ist insbesondere am Druckkopf angeordnet, um die Berechnung der Lage der Oberfläche des Elementes gegenüber dem Druckkopf zu erleichtern.

Das Eingabesystem zur Gestaltung des Designs und/oder zum zumindest teilweisen Auswählen des Designs aus einer oder mehreren Vorlagen ist insbesondere ein Tablet oder ein Smartphone oder ein Computer.

Das erfindungsgemäße Verfahren und die erfindungsgemäße Vorrichtung werden nachstehend auch hinsichtlich weiterer Merkmale und Vorteile anhand der Beschreibung von Ausführungsbeispielen und unter Bezugnahme auf die beiliegenden, schematischen Zeichnungen näher erläutert. Dabei zeigen
- FIG 1: den Ablauf des Verfahrens zum Aufbringen eines Designs auf eine Oberfläche eines Elementes,
- FIG 2: eine schematische Darstellung einer Vorrichtung zum Aufbringen eines Designs auf eine Oberfläche eines Elementes,
- FIG 3: einen Ausschnitt der Vorrichtung gemäß FIG 2 zum Aufbringen eines Designs auf eine Oberfläche eines runden Elementes,
- FIG 4: einen Ausschnitt der Vorrichtung gemäß FIG 2 zum Aufbringen eines Designs auf eine Oberfläche eines sechseckigen Elementes.

Einander entsprechende Teile und Komponenten sind auch über die verschiedenen Figuren und Ausführungsbeispiele hinweg jeweils mit den gleichen Bezugszeichen bezeichnet.

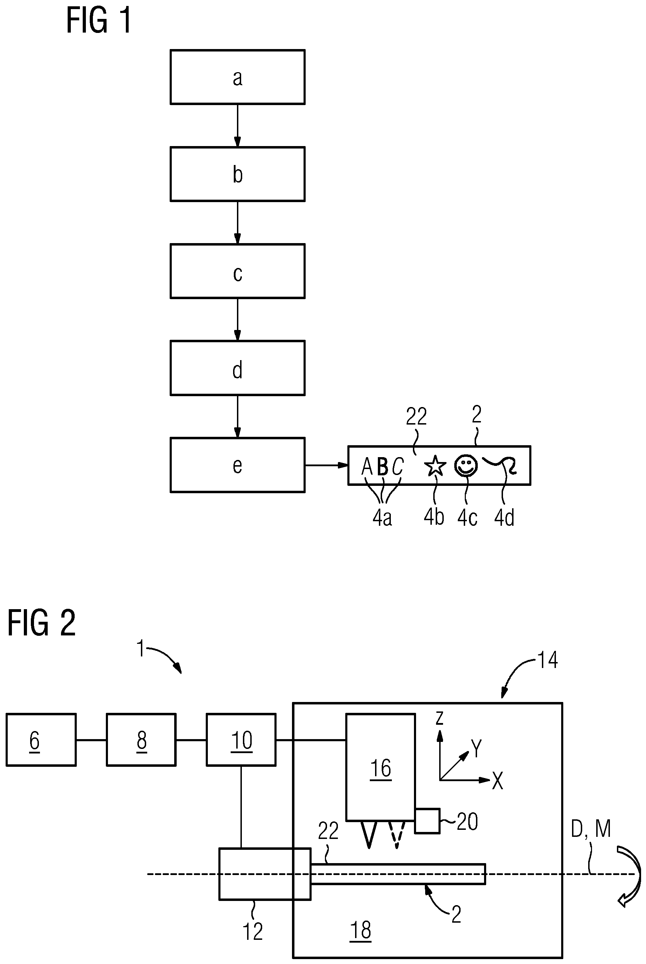

FIG. 1 zeigt den Ablauf des erfindungsgemäßen Verfahrens zum Aufbringen verschiedener Designs 4a, 4b, 4c, 4d auf eine Oberfläche 22 eines Elementes 2 eines Schreibgerätes mittels 3D-Druck mit einer in FIG 2 gezeigten Vorrichtung 1.

Die Vorrichtung 1 umfasst einen 3D-Drucker 14 einen Druckkopf 16 mit beispielhaft zwei Austrittsöffnungen, um zwei oder mehrere Materialien verwenden zu können, wodurch sich beispielsweise zweifarbige Designs aufbringen lassen. Der Druckkopf 16 ist innerhalb eines Druckraums 18 entlang einer ersten Bewegungsachse bzw. in x- und -x-Richtung, entlang einer zweiten Bewegungsachse bzw. in y- und -y-Richtung und entlang einer dritten Bewegungsachse bzw. in z- und -z-Richtung bewegbar. Ferner umfasst die Vorrichtung 1 eine Positionier- und Drehvorrichtung 12 zum Positionieren des Elementes 2 innerhalb des Druckraumes 18 des 3D-Druckers 14 und zum Drehen des Elementes 2 um eine Drehachse D. Die Vorrichtung 1 umfasst ferner ein Eingabesystem 6, beispielhaft ein Tablet, zur Gestaltung der Designs 4a, 4b, 4c, 4d, eine Datenverarbeitungseinheit 8 zur Umwandlung der Designs in eine Vektorgrafik oder in ein 3D-Modell sowie eine Schnittstelle 10 zur Übergabe der Vektorgrafik oder des 3D-Modells an den 3D-Drucker 14.

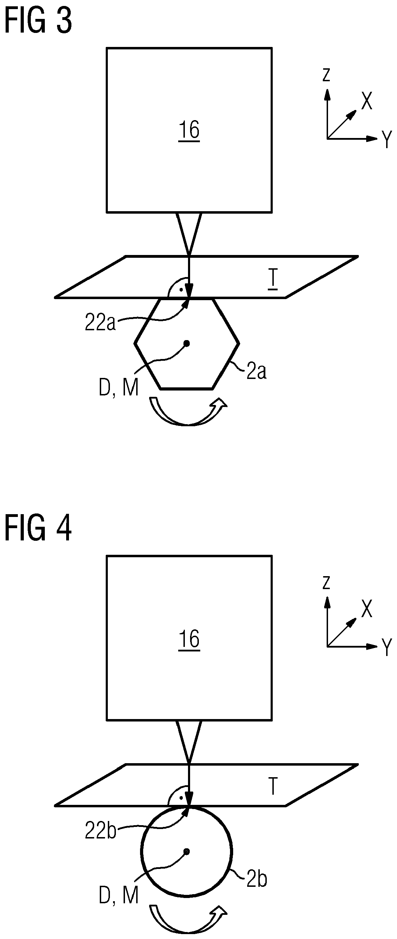

Das Element 2 kann ein Element eines Schreibgerätes, z.B. ein Bleistift, oder auch ein Element für ein Schreibgerät, z.B. ein Spitzer, sein. In FIG 3 ist beispielhaft für das Element 2 ein sechseckiger Stift 2a, in FIG 4 ist beispielhaft für das Element ein runder Stift 2b gezeigt. Das Verfahren wird nachfolgend anhand FIG 1 für das Element 2 beschrieben, die Ausführungen gelten jedoch ebenso in Bezug auf die Stifte 2a, 2b.

In einem ersten Schritt a) werden die Designs 4a, 4b, 4c, 4d mit dem Eingabesystem 6 gestaltet. Beispielhaft umfasst das Design 4a verschiedene Buchstaben in unterschiedlichen Schriftarten, die Designs 4b, 4c enthalten Formen oder Symbole, vorliegend ein Stern und ein Smiley, die aus Vorlagen ausgewählt sind. Design 4d ist ein individuell gestaltetes Design, welches mit einem Eingabestift auf dem Tablet erzeugt wurde.

In einem weiteren Schritt b) werden die Designs 4a, 4b, 4c, 4d in der Datenverarbeitungseinheit 8 jeweils in eine Vektorgrafik bzw. in ein druckfähiges Datenformat umgewandelt. Ferner ermittelt die Datenverarbeitungseinheit 8 hieraus zum Aufbringen der Designs 4a, 4b, 4c, 4d erforderliche Drehwinkel für das Element 2. Anschließend (Schritt c)) werden die Daten über eine Schnittstelle 10 an eine Positionier- und Drehvorrichtung 12 und einen 3D-Drucker 14 übergeben.

Zum Aufbringen der Designs 4a, 4b, 4c, 4d wird das Element 2 mit der Positionier- und Drehvorrichtung 12 innerhalb des Druckraums 18 des 3D-Druckers 14 positioniert (Schritt d)). Zur Positionierung und nachfolgenden Drehung des Elementes weist die Positionier- und Drehvorrichtung eine Steuerung sowie Antriebsmotoren, beispielsweise einen Stellmotor auf.

Das Drucken der Designs 4a, 4b, 4c, 4d auf die Oberfläche 22 des Elementes 2 erfolgt anschließend derart, dass der Druckkopf 16 des 3D-Druckers 14 entlang einer ersten Bewegungsachse in x- und/oder -x-Richtung bewegt wird und das Element 2 in Abhängigkeit des Verlaufs der Designs 4a, 4b, 4c, 4d mittels der Positionier- und Drehvorrichtung 12 um eine Drehachse D des Elementes 2 so gedreht wird, dass der Druckkopf 16 stets senkrecht zu einer Tangentialebene T des zu bedruckenden Bereichs oder des zu bedruckenden Punktes der Oberfläche 22 des Elementes 2 ausgerichtet ist. Die Drehachse D verläuft parallel zu der ersten Bewegungsachse und entlang einer Mittellängsachse M des Elementes 2.

Das Design 4a weist beispielsweise in Y-Richtung verlaufende Abschnitte auf, vorliegend ein Teil des "B's". Der Druckkopf 16 kann daher zusätzlich entlang einer zweiten Bewegungsachse in y- und/oder -y-Richtung bewegt werden, die senkrecht zu der ersten Bewegungsachse orientiert ist. Um mehrere Schichten der Designs 4a, 4b, 4c, 4d aufzubringen, diese also erhaben auszubilden, wird der Druckkopf 16 entlang einer dritten Bewegungsachse in z- und/oder -z-Richtung bewegt.

Die Vorrichtung 1 weist ferner einen Sensor 20 zum Erfassen der Lage der Oberfläche 22 des Elementes 2 auf, wobei der Sensor 20 am Druckkopf 16 angeordnet ist. Mit dem Sensor 20 wird eine Lage der Oberfläche 22 des Elementes 2 erfasst, um zum Aufbringen des Designs 4a, 4b, 4c, 4d erforderliche Drehwinkel für das Element 2 zu ermitteln.

In FIG 3 ist ein Element 2a mit einer Flächenabschnitte aufweisenden Oberfläche 22, vorliegend ein sechseckiger Stift gezeigt. Um ein Design 4a, 4b, 4c, 4d auf die Oberfläche 22 des Elementes 2a aufzubringen, wird das Element 2a derart ausgerichtet, dass der Druckkopf 16 des 3D-Druckers 14 stets senkrecht zu der Tangentialebene T des zu bedruckenden Bereichs 22a, vorliegend ein Flächenabschnitt ausgerichtet ist. Der Druckkopf 16 wird vorliegend während des Aufbringens des Designs auf den Flächenabschnitt entlang einer ersten Bewegungsachse in x- und/oder -x-Richtung sowie entlang einer zweiten Bewegungsachse in y- und/oder -y-Richtung bewegt. Soll ein weiterer der sechs Flächenabschnitte bedruckt werden oder erstreckt sich das aufzubringende Design über mehrere Flächenabschnitte, wird das Element 2a mittels der Positionier- und Drehvorrichtung 12 um eine Drehachse D um einen Winkel 60°, 120°, 180°, 240° oder 300° gedreht.

In FIG 4 ist ein Element 2b mit einer gekrümmten Oberfläche 22, vorliegend ein runder Stift gezeigt. Zum Aufbringen des Designs 4a, 4b, 4c, 4d erforderliche Drehwinkel werden unter Berücksichtigung der runden Form der Oberfläche ermittelt und an die Positionier- und Drehvorrichtung 12 übermittelt. Während des Druckvorganges wird das Element 2b um eine Drehachse D so gedreht, dass der Druckkopf 16 stets senkrecht zu einer Tangentialebene T des zu bedruckenden Punktes 22a der Oberfläche 22 des Elementes 2 ausgerichtet ist.

### Bezugszeichen liste

- 1: Vorrichtung
- 2: Element
- 2a: sechseckiges Element
- 2b: rundes Element
- 4a, b, c, d: Design
- 6: Eingabesystem
- 8: Datenverarbeitungseinheit
- 10: Schnittstelle
- 12: Positionier- und Drehvorrichtung
- 14: 3D-Drucker
- 16: Druckkopf
- 18: Druckraum
- 20: Sensor
- 22: Oberfläche
- 22a: Oberflächenbereich
- 22b: Oberflächenpunkt

- D: Drehachse
- M: Mittellängsachse des Elementes
- T: Tangentialebene

## Patentansprüche

1. Verfahren zur individuellen Gestaltung einer Oberfläche (22) eines Elementes (2, 2a, 2b) eines Schreibgerätes oder einer Oberfläche eines Elementes für ein Schreibgerät durch Aufbringen eines individuell gestalteten Designs (4a, 4b, 4c, 4d) auf die Oberfläche (22) des Elementes (2, 2a, 2b) des Schreibgerätes oder auf die Oberfläche des Elementes für das Schreibgerät mittels 3D-Druck, umfassend folgende Schritte:
a) Bereitstellen eines mittels eines automatischen Herstellungsprozesses hergestellten Schreibgerätes oder Zubehörs oder Zubehörteiles für ein Schreibgerät,
b) individuelle Gestaltung des Designs (4a, 4b, 4c, 4d) und/oder zumindest teilweises Auswählen des Designs (4a, 4b, 4c, 4d) aus einer oder mehreren Vorlagen mittels eines Eingabesystems (6),
c) Umwandeln des individuell gestalteten und/oder zumindest teilweise aus einer oder mehreren Vorlagen ausgewählten Designs (4a, 4b, 4c, 4d) in eine Vektorgrafik oder in ein 3D-Modell,
d) Übergabe der Vektorgrafik oder des 3D-Modells an einen 3D-Drucker (14),
e) Einbringen und Positionieren des Elementes (2, 2a, 2b) innerhalb eines Druckraums (18) des 3D-Druckers (14) mittels einer Positionierund Drehvorrichtung (12),
f) Drucken des individuell gestalteten und/oder zumindest teilweise ausgewählten Designs (4a, 4b, 4c, 4d) auf die Oberfläche (22, 22a, 22b) des Elementes (2, 2a, 2b), wobei ein Druckkopf (16) des 3D-Druckers (14) zumindest entlang einer ersten Bewegungsachse in x-und/oder -x-Richtung bewegt wird und das Element (2, 2a, 2b) in Abhängigkeit des Verlaufs des Designs (4a, 4b, 4c, 4d) mittels der Positionier- und Drehvorrichtung (12) um eine Drehachse (D) des Elementes (2, 2a, 2b) so gedreht wird, dass der Druckkopf (16) stets senkrecht zu einer Tangentialebene (T) des zu bedruckenden Bereichs (22a) oder des zu bedruckenden Punktes (22b) der Oberfläche (22) des Elementes (2, 2a, 2b) ausgerichtet ist.

2. Verfahren nach Anspruch 1, ferner umfassend den folgenden Schritt:
g) Herausbringen des Elementes (2, 2a, 2b) aus dem Druckraum (18) mittels der Positionier- und Drehvorrichtung (12)

3. Verfahren nach einem Ansprüche 1 oder 2, wobei das Element (2, 2a, 2b) um eine parallel zu der ersten Bewegungsachse und/oder entlang einer Mittellängsachse (M) des Elementes (2, 2a, 2b) verlaufenden Drehachse (D) gedreht wird.

4. Verfahren nach einem der vorhergehenden Ansprüche, wobei der Drucckopf (16) zusätzlich entlang einer zweiten Bewegungsachse in y- und/oder -y-Richtung bewegt wird, die senkrecht zu der ersten Bewegungsachse orientiert ist.

5. Verfahren nach einem der vorhergehenden Ansprüche, wobei der Drucckopf (16) entlang einer dritten Bewegungsachse in z- und/oder -z-Richtung bewegt wird, um eine zweite und/oder eine weitere Schicht des Designs (4a, 4b, 4c, 4d) aufzubringen.

6. Verfahren nach einem der vorhergehenden Ansprüche, wobei eine Lage der Oberfläche (22, 22a, 22b) des Elementes (2, 2a, 2b) mittels eines Sensors (20) erfasst und daraus zum Aufbringen des Designs (4a, 4b, 4c, 4d) erforderliche Drehwinkel für das Element (2, 2a, 2b) ermittelt und/oder überprüft werden.

7. Verfahren nach einem der vorhergehenden Ansprüche, wobei das Element (2, 2b) eine gekrümmte Oberfläche (22) aufweist.

8. Verfahren nach einem der vorhergehenden Ansprüche, wobei zum Aufbringen des Designs (4a, 4b, 4c, 4d) erforderliche Drehwinkel unter Berücksichtigung der Form der Oberfläche (22) ermittelt und an die Positionier- und Drehvorrichtung (12) übermittelt werden.

9. Verfahren nach einem der vorhergehenden Ansprüche, wobei beim Aufbringen des Designs (4a, 4b, 4c, 4d) zwei oder mehrere Materialien verwendet werden.

10. Vorrichtung (1) zur individuellen Gestaltung einer Oberfläche (22) eines Elementes (2, 2a, 2b) eines Schreibgerätes oder einer Oberfläche eines Elementes für ein Schreibgerät durch Aufbringen eines individuell gestalteten Designs (4a, 4b, 4c, 4d) auf die Oberfläche (22) des Elementes (2, 2a, 2b) des Schreibgerätes oder auf die Oberfläche des Elementes für das Schreibgerät mittels 3D-Druck, insbesondere zum Durchführen eines Verfahrens nach einem der vorhergehenden Ansprüche, umfassend
- einen 3D-Drucker (14) mit einem Druckkopf (16), wobei der Drucckopf (16) innerhalb eines Druckraums (18) entlang einer ersten, zweiten und/oder dritten Bewegungsachse bewegbar ist,
- eine Positionier- und Drehvorrichtung (12) zum Einbringen und Positionieren des Elementes (2, 2a, 2b) innerhalb des Druckraumes (18) des 3D-Druckers (14), zum Drehen des Elementes (2, 2a, 2b) um eine Drehachse (D),
- ein Eingabesystem (6) zur individuellen Gestaltung des Designs (4a, 4b, 4c, 4d) und/oder zum zumindest teilweisen Auswählen des Designs aus einer oder mehreren Vorlagen,
- eine Datenverarbeitungseinheit (8) zur Umwandlung des individuell gestalteten und/oder zumindest teilweise aus einer oder mehreren Vorlagen ausgewählten Designs in eine Vektorgrafik oder in ein 3D-Modell,
- eine Schnittstelle (10) zur Übergabe der Vektorgrafik oder des 3D-Modells an den 3D-Drucker (14).

11. Vorrichtung (1) nach Anspruch 10, umfassend einen Sensor (20) zum Erfassen der Lage der Oberfläche (22) des Elementes (2, 2a, 2b).

12. Vorrichtung (1) nach Anspruch 11, wobei der Sensor (20) am Druckkopf (16) angeordnet ist.

13. Vorrichtung (1) nach einem der Ansprüche 10 bis 12, wobei das Eingabesystem (6) ein Tablet oder ein Smartphone oder ein Computer ist.

## Claims

1. A method of customising a surface (22) of an element (2, 2a, 2b) of a writing instrument or a surface of an element for a writing instrument by applying a customised design (4a, 4b, 4c, 4d) to the surface (22) of the element (2, 2a, 2b) of the writing instrument or to the surface of the element for the writing instrument by means of 3D printing, comprising the following steps:
a) providing a writing instrument or accessory or accessory part for a writing instrument manufactured by means of an automatic manufacturing process,
b) customising of the design (4a, 4b, 4c, 4d) and/or at least partial selection of the design (4a, 4b, 4c, 4d) from one or more templates by means of an input system (6),
c) converting the customised and/or at least partially from one or more templates selected design (4a, 4b, 4c, 4d) into a vector graphic or a 3D model,
d) transferring the vector graphic or 3D model to a 3D printer (14),
e) inserting and positioning the element (2, 2a, 2b) within a printing space (18) of the 3D printer (14) by means of a positioning and rotating device (12),
f) printing the customised and/or at least partially selected design (4a, 4b, 4c, 4d) onto the surface (22, 22a, 22b) of the element (2, 2a, 2b), wherein a print head (16) of the 3D printer (14) is moved at least along a first axis of movement in the x- and/or -x-direction and the element (2, 2a, 2b) is rotated about an axis of rotation (D) of the element (2, 2a, 2b) as a function of the course of the design (4a, 4b, 4c, 4d) by means of the positioning and rotating device (12) in such a way that the print head (16) is always aligned perpendicular to a tangential plane (T) of the area (22a) to be printed or of the point (22b) of the surface (22) of the element (2, 2a, 2b) to be printed.

2. Method according to claim 1, further comprising the following step:
g) removing the element (2, 2a, 2b) from the printing space (18) by means of the positioning and rotating device (12)

3. Method according to a claim 1 or 2, wherein the element (2, 2a, 2b) is rotated about an axis of rotation (D) extending parallel to the first axis of movement and/or along a central longitudinal axis (M) of the element (2, 2a, 2b).

4. Method according to one of the preceding claims, wherein the print head (16) is additionally moved along a second axis of movement in y-and/or -y-direction, which is orientated perpendicular to the first axis of movement.

5. Method according to one of the preceding claims, wherein the print head (16) is moved along a third axis of movement in z- and/or -z-direction in order to apply a second and/or a further layer of the design (4a, 4b, 4c, 4d).

6. Method according to one of the preceding claims, wherein a position of the surface (22, 22a, 22b) of the element (2, 2a, 2b) is detected by means of a sensor (20) and the angle of rotation required for the element (2, 2a, 2b) for applying the design (4a, 4b, 4c, 4d) is determined and/or checked therefrom.

7. Method according to one of the preceding claims, wherein the element (2, 2b) has a curved surface (22).

8. Method according to one of the preceding claims, wherein angles of rotation required for applying the design (4a, 4b, 4c, 4d) are determined taking into account the shape of the surface (22) and are transmitted to the positioning and rotating device (12).

9. Method according to any one of the preceding claims, wherein two or more materials are used in applying the design (4a, 4b, 4c, 4d).

10. Device (1) for customising a surface (22) of an element (2, 2a, 2b) of a writing instrument or a surface of an element for a writing instrument by applying a customised design (4a, 4b, 4c, 4d) to the surface (22) of the element (2, 2a, 2b) of the writing instrument or to the surface of the element for the writing instrument by means of 3D-printing, in particular for carrying out a method according to one of the preceding claims, comprising
- a 3D-printer (14) with a print head (16), wherein the print head (16) is movable within a printing space (18) along a first, second and/or third axis of movement,
- a positioning and rotating device (12) for inserting and positioning the element (2, 2a, 2b) within the printing space (18) of the 3D-printer (14), for rotating the element (2, 2a, 2b) about an axis of rotation (D),
- an input system (6) for customising the design (4a, 4b, 4c, 4d) and/or for at least partially selecting the design from one or more templates,
- a data processing unit (8) for converting the customised and/or at least partially from one or more templates selected design into a vector graphic or into a 3D model,
- an interface (10) for transferring the vector graphic or the 3D model to the 3D printer (14).

11. Device (1) according to claim 10, comprising a sensor (20) for detecting the position of the surface (22) of the element (2, 2a, 2b).

12. Device (1) according to claim 11, wherein the sensor (20) is arranged at the print head (16).

13. Device (1) according to any one of claims 10 to 12, wherein the input system (6) is a tablet or a smartphone or a computer.

## Revendications

1. Procédé de personnalisation d'une surface (22) d'un élément (2, 2a, 2b) d'un instrument d'écriture ou d'une surface d'un élément pour un instrument d'écriture par application d'un design personnalisé (4a, 4b, 4c, 4d) sur la surface (22) de l'élément (2, 2a, 2b) de l'instrument d'écriture ou sur la surface de l'élément pour l'instrument d'écriture au moyen d'une imprimante 3D, comprenant les étapes suivantes:
a) Fournir un instrument d'écriture ou un accessoire ou une partie d'accessoire d'un instrument d'écriture fabriqué au moyen d'un procédé de fabrication automatique,
b) personnalisation du design (4a, 4b, 4c, 4d) et/ou la sélection au moins partielle du design (4a, 4b, 4c, 4d) à partir d'un ou de plusieurs modèles au moyen d'un système d'entrée (6),
c) convertir le design personnalisé (4a, 4b, 4c, 4d) et/ou sélectionné au moins partiellement à partir d'un ou de plusieurs modèles en un graphique vectoriel ou en un modèle 3D,
d) transfert du graphique vectoriel ou du modèle 3D vers une imprimante 3D (14),
e) l'introduction et le positionnement de l'élément (2, 2a, 2b) à l'intérieur d'un espace d'impression (18) de l'imprimante 3D (14) au moyen d'un dispositif de positionnement et de rotation (12),
f) imprimer le design personnalisé (4a, 4b, 4c, 4d) et/ou sélectionné au moins partiellement sur la surface (22, 22a, 22b) de l'élément (2, 2a, 2b), une tête d'impression (16) de l'imprimante 3D (14) étant déplacée au moins le long d'un premier axe de mouvement dans la direction x et/ou -x et l'élément (2, 2a, 2b) étant tourné autour d'un axe de rotation (D) en fonction du tracé du design (4a, 4b, 4c, 4d) au moyen du dispositif de positionnement et de rotation (12) de telle sorte que la tête d'impression (16) soit toujours orientée perpendiculairement à un plan tangentiel (T) de la zone à imprimer (22a) ou du point à imprimer (22b) de la surface (22) de l'élément (2, 2a, 2b).

2. Procédé selon la revendication 1, comprenant en outre l'étape suivante: g) sortir l'élément (2, 2a, 2b) de l'espace d'impression (18) au moyen du dispositif de positionnement et de rotation (12).

3. Procédé selon l'une des revendications 1 ou 2, dans lequel l'élément (2, 2a, 2b) est tourné autour d'un axe de rotation (D) parallèle au premier axe de mouvement et/ou selon un axe longitudinal médian (M) de l'élément (2, 2a, 2b).

4. Procédé selon l'une des revendications précédentes, dans lequel la tête d'impression (16) est en outre déplacée le long d'un deuxième axe de mouvement dans la direction y- et/ou -y orienté perpendiculairement au premier axe de mouvement.

5. Procédé selon l'une des revendications précédentes, dans lequel la tête d'impression (16) est déplacée le long d'un troisième axe de mouvement dans la direction z- et/ou -z pour appliquer une deuxième et/ou une autre couche du design (4a, 4b, 4c, 4d).

6. Procédé selon l'une des revendications précédentes, dans lequel une position de la surface (22, 22a, 22b) de l'élément (2, 2a, 2b) est détectée au moyen d'un capteur (20) et des angles de rotation pour l'élément (2, 2a, 2b) nécessaires pour appliquer le design (4a, 4b, 4c, 4d) sont déterminés et/ou contrôlés.

7. Procédé selon l'une des revendications précédentes, dans lequel l'élément (2, 2b) présente une surface incurvée (22).

8. Procédé selon l'une des revendications précédentes, dans lequel des angles de rotation nécessaires pour appliquer le design (4a, 4b, 4c, 4d) sont déterminés en tenant compte de la forme de la surface (22) et sont transmis au dispositif de positionnement et de rotation (12).

9. Procédé selon l'une des revendications précédentes, dans lequel deux ou plusieurs matériaux sont utilisés lors de l'application du design (4a, 4b, 4c, 4d).

10. Dispositif (1) pour la personnalisation d'une surface (22) d'un élément (2, 2a, 2b) d'un instrument d'écriture ou d'une surface d'un élément pour un instrument d'écriture par application d'un design personnalisé (4a, 4b, 4c, 4d) sur la surface (22) de l'élément (2, 2a, 2b) de l'instrument d'écriture ou sur la surface de l'élément pour l'instrument d'écriture au moyen d'une imprimante 3D, en particulier pour la mise en oeuvre d'un procédé selon l'une des revendications précédentes, comprenant
- une imprimante 3D (14) avec une tête d'impression (16), la tête d'impression (16) étant mobile à l'intérieur d'un espace d'impression (18) le long d'un premier, deuxième et/ou troisième axe de mouvement,
- un dispositif de positionnement et de rotation (12) pour introduire et positionner l'élément (2, 2a, 2b) à l'intérieur de l'espace d'impression (18) de l'imprimante 3D (14), pour faire tourner l'élément (2, 2a, 2b) autour d'un axe de rotation (D),
- un système d'entrée (6) pour la personnalisation du design (4a, 4b, 4c, 4d) et/ou pour la sélection au moins partielle du design à partir d'un ou de plusieurs modèles,
- une unité de traitement de données (8) pour convertir le design personnalisé et/ou sélectionné au moins partiellement à partir d'un ou de plusieurs modèles en un graphique vectoriel ou en un modèle 3D,
- une interface (10) pour transférer le graphique vectoriel ou le modèle 3D à l'imprimante 3D (14).

11. Dispositif (1) selon la revendication 10, comprenant un capteur (20) pour détecter la position de la surface (22) de l'élément (2, 2a, 2b).

12. Dispositif (1) selon la revendication 11, dans lequel le capteur (20) est disposé sur la tête d'impression (16).

13. Dispositif (1) selon l'une des revendications 10 à 12, dans lequel le système d'entrée (6) est une tablette ou un smartphone ou un ordinateur.
